# FASCICULE DE BREVET EUROPEEN

(11) **EP 1 527 715 B1**
(45) Date de publication et mention de la délivrance du brevet: **23.08.2006**
(21) Numéro de dépôt: 04292358.1
(22) Date de dépôt: 05.10.2004
(51) Int. Cl.: A47C 27/06

(54) **Chapelet de ressorts hélico daux en poches pour suspensions à ressorts ensachés de matelas de literie**
Kette von Taschenfedern für eine Bettmatratze.
A string of pocketed springs for a bed mattress.

(30) Priorité: 27.10.2003 FR 0312532
(43) Date de publication de la demande: 04.05.2005
(73) Titulaire: LA COMPAGNIE CONTINENTALE SIMMONS, 77185 Lognes (FR)
(72) Inventeur: Coissard, Michel, 59900 Valenciennes (FR)
(74) Mandataire: Thinat, Michel

(56) Documents cités:
- US-B1- 6 256 820
- US-B1- 6 397 418
- US-B1- 6 523 812

## Description

La présente invention concerne un chapelet de ressorts hélicoïdaux logés dans des poches de retenue et destiné à la confection de suspensions à ressorts ensachés pour des matelas de literie.

On connaît des suspensions à ressorts ensachés pour des matelas de literie constituées d'une pluralité de chapelets parallèles de ressorts en poches reliés les uns aux autres de manière que les ressorts ensachés adoptent une configuration en carré.

Un chapelet de ressorts à boudin est fabriqué en insérant les ressorts à boudin entre deux couches superposées d'une bande d'étoffe allongée thermosoudable en des positions espacées longitudinalement sur la bande. Ensuite, les couches superposées sont soudées thermiquement entre elles suivant des lignes transversales à la bande situées entre les ressorts successifs et des lignes longitudinales, de manière à former autour de chaque ressort à boudin une poche de retenue.

Si l'on souhaite réaliser un matelas d'une épaisseur double de celle d'un matelas contenant une suspension à ressorts ensachés, il est alors nécessaire de prévoir une deuxième suspension à chapelets parallèles de ressorts en poches reliés les uns aux autres et disposée au-dessus des chapelets de ressorts en poches de la première suspension.

Un tel agencement à double suspension a pour inconvénient que les ressorts des deux suspensions superposées ne sont pas forcément les uns au-dessus des autres coaxialement, et est relativement coûteuse.

La présente invention a pour but d'éliminer les inconvénients ci-dessus en proposant un chapelet de ressorts hélicoïdaux logés dans des poches de retenue et destiné à la confection de suspensions à ressorts ensachés pour des matelas de literie, et qui est caractérisé en ce que chaque poche du chapelet contient au moins deux ressorts hélicoïdaux en tonneau reliés en série l'un à l'autre par au moins une spire centrale de plus petit diamètre.

Les deux ressorts hélicoïdaux d'une même poche ont la même raideur ou des raideurs différentes.

Chaque ressort hélicoïdal double est réalisé sans discontinuité à partir d'un même fil métallique.

L'invention vise également une suspension à ressorts ensachés pour matelas de literie, comprenant plusieurs chapelets parallèles de ressorts en poches reliés les uns aux autres, et qui est caractérisée en ce que chaque poche d'un chapelet renferme au moins deux ressorts hélicoïdaux en tonneau reliés en série l'un à l'autre par au moins une spire centrale de plus petit diamètre.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue de face d'un ressort double conforme à l'invention pour des suspensions à ressorts ensachés de matelas de literie ;
- la figure 2 représente le ressort double de la figure 1, logé dans une poche de retenue faisant partie d'un chapelet de ressorts en poches ; et
- la figure 3 représente deux chapelets parallèles de ressorts en poches reliés les uns aux autres, chacun des ressorts étant identique à celui de la figure 1.

En se reportant aux figures, la référence 1 désigne une suspension à ressorts ensachés pour un matelas de literie.

Une telle suspension comprend une pluralité de chapelets parallèles de ressorts en poches 2 reliés les uns aux autres de manière que les ressorts, lorsque vus de dessus, adoptent une configuration en carré.

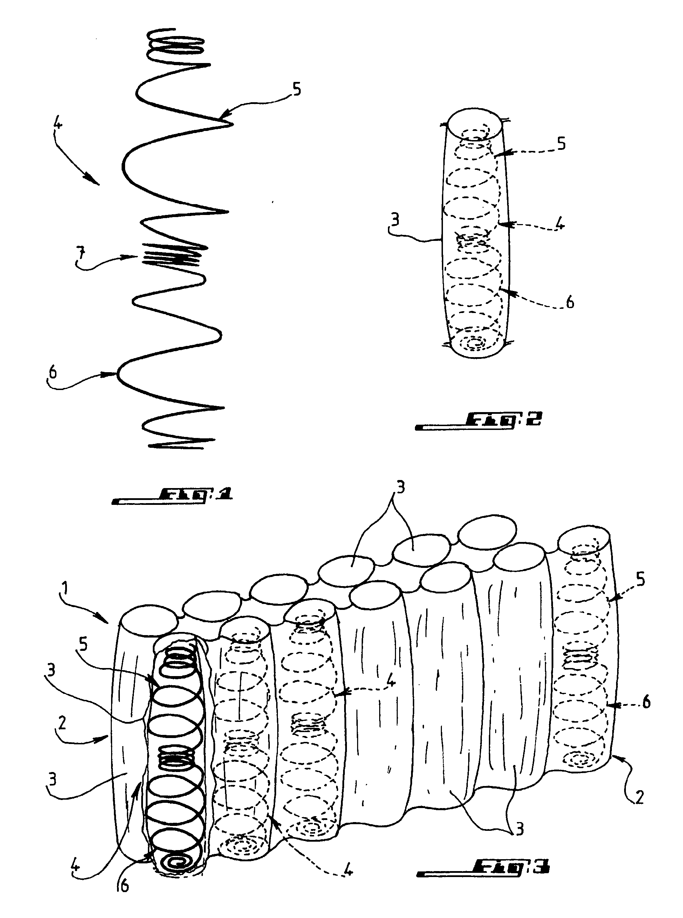

Selon la figure 3, seuls deux chapelets 2 de la suspension à ressorts ensachés sont représentés.

Ainsi, chaque poche 3 d'un chapelet contient un ressort hélicoïdal 4.

Comme cela est connu en soi, la fabrication d'un chapelet de ressorts hélicoïdaux consiste tout d'abord à insérer les ressorts 4 entre deux couches superposées d'une bande d'étoffe allongée thermosoudable en des positions ou emplacements espacés longitudinalement entre la bande puis à souder thermiquement les couches entre elles suivant des lignes transversales à la bande, disposées entre les ressorts successifs 4, et des lignes longitudinales, de manière à former autour de chaque ressort 4 une poche de retenue 3. Après formation des poches, on fait tourner les ressorts 4 à l'intérieur de celles-ci de manière que leurs axes soient transversaux à l'axe longitudinal de la bande.

Deux chapelets adjacents de ressorts en poches 2 peuvent être reliés l'un à l'autre par des lignes d'adhésif continues ou discontinues comme cela est déjà connu en soi.

Selon l'invention, chaque poche 3 d'un chapelet 2 contient au moins deux ressorts hélicoïdaux en tonneau 5,6 reliés en série l'un à l'autre par au moins une spire centrale 7 de plus petit diamètre.

Chaque ressort hélicoïdal double 5, 6 est réalisé sans discontinuité à partir d'un même fil métallique par un mécanisme classique de formation de ressorts à boudin.

Les deux ressorts à boudins 5, 6 d'un ressort double 4 logés dans une même poche 3 peuvent avoir la même raideur, mais peuvent avoir des raideurs différentes si l'on souhaite créer des différentes combinaison de confort d'un emplacement à l'autre du matelas. Cette différence de raideur peut être obtenue en augmentant ou diminuant le nombre de spires ou d'enroulements de l'un ou l'autre des deux ressorts en série 5, 6.

Chaque poche 3 d'un chapelet 2 peut renfermer trois ressorts, voire plus, reliés les uns aux autres en série.

Une suspension formée à partir de chapelets à ressorts doubles ensachés est d'un prix de revient relativement bas et peut être fabriquée à une cadence élevée.

## Revendications

1. Chapelet de ressorts hélicoïdaux (4) logés dans des poches de retenue (3) et destiné à la confection de suspensions à ressorts ensachés pour des matelas de literie, **caractérisé en ce que** chaque poche (3) du chapelet (2) contient au moins deux ressorts hélicoïdaux en tonneau (5,6) reliés en série l'un à l'autre par au moins une spire centrale (7) de plus petit diamètre.

2. Chapelet selon la revendication 1, **caractérisé en ce que** les deux ressorts hélicoïdaux (5,6) d'une même poche (3) ont la même raideur ou des raideurs différentes.

3. Chapelet selon la revendication 1 ou 2, **caractérisé en ce que** chaque ressort hélicoïdal double (4) est réalisé sans discontinuité à partir d'un même fil métallique.

4. Suspension à ressorts ensachés pour matelas de literie, comprenant plusieurs chapelets parallèles de ressorts en poches (2) reliés les uns aux autres, **caractérisée en ce que** chaque poche (3) d'un chapelet (2) renferme au moins deux ressorts hélicoïdaux en tonneau (5,6) reliés en série l'un à l'autre par au moins une spire centrale (7) de plus petit diamètre.

## Claims

1. A string of helicoidal springs (4) housed in retaining pockets (3) and intended for making up pocketed spring suspensions for bed mattresses, **characterised in that** each pocket (3) of the string (2) contains at least two barrel-shaped helicoidal springs (5, 6) connected to each other in series by at least one central turn (7) of smaller diameter.

2. A string according to claim 1, **characterised in that** the two helicoidal springs (5, 6) in the same pocket (3) have the same stiffness or different stiffnesses.

3. A string according to claim 1 or claim 2, **characterised in that** each double helicoidal spring (4) is made without discontinuities from the same metal wire.

4. A pocketed spring suspension for bed mattresses, comprising a plurality of parallel strings of pocketed springs (2) connected to each other, **characterised in that** each pocket (3) of a string (2) contains at least two barrel-shaped helicoidal springs (5, 6) connected to each other in series by at least one central turn (7) of smaller diameter.

## Patentansprüche

1. Aneinanderreihung von Spiralfedern (4), die in Lagertaschen (3) aufgenommen und zur Konfektion von Taschenfederkernen für Bettmatratzen vorgesehen sind, **dadurch gekennzeichnet, dass** jede Tasche (3) der Aneinanderreihung (2) zumindest zwei Tonnenspiralfedern (5, 6) enthält, die über zumindest eine im Durchmesser kleinere Mittelwindung (7) in Reihe miteinander verbunden sind.

2. Aneinanderreihung nach Anspruch 1, **dadurch gekennzeichnet, dass** die beiden Spiralfedern (5, 6) einer gleichen Tasche (3) die gleiche Steifigkeit oder eine unterschiedliche Steifigkeit haben.

3. Aneinanderreihung nach Anspruch 1 oder 2, **dadurch gekennzeichnet, dass** jede Doppelspiralfeder (4) durchgehend aus einem gleichen Metalldraht ausgebildet ist.

4. Taschenfederkern für Bettmatratzen mit mehreren parallelen Aneinanderreihungen von miteinander verbundenen Taschenfedern (2), **dadurch gekennzeichnet, dass** jede Tasche (3) einer Aneinanderreihung (2) zumindest zwei Tonnenspiralfedern (5, 6) verschließt, die über zumindest eine im Durchmesser kleinere Mittelwindung (7) in Reihe miteinander verbunden sind.
